# EUROPÄISCHE PATENTSCHRIFT

(11) **EP 2 815 086 B1**
(45) Veröffentlichungstag und Bekanntmachung des Hinweises auf die Patenterteilung: **04.10.2017**
(21) Anmeldenummer: 13704448.3
(22) Anmeldetag: 15.02.2013
(51) Int. Cl.: F01K 23/06, F01K 23/10, F02G 5/02, F22B 1/18, F22B 35/00, F28F 13/00, F28D 7/02, F28D 7/10, F28F 1/24, F01N 5/02, F28D 21/00

(54) **Abgaswärmenutzungsvorrichtung mit einem Rakine-Prozess**
WASTE HEAT RECOVERY DEVICE WITH A RANKINE CYCLE
DISPOSITIF POUR L'UTILISATION DE CHALEUR RESIDUELLE AVEC UN CYCLE DE RANKINE

(30) Priorität: 16.02.2012 DE 102012202390; 15.03.2012 DE 102012204126
(43) Veröffentlichungstag der Anmeldung: 24.12.2014
(73) Patentinhaber: Eberspächer Exhaust Technology GmbH & Co. KG, 66539 Neunkirchen (DE)
(72) Erfinder: HARTMANN, Marc, 72108 Rottenburg a.N. (DE); GESER, Stefan, 71332 Waiblingen (DE)
(74) Vertreter: BRP Renaud & Partner mbB Rechtsanwälte Patentanwälte Steuerberater
(86) Internationale Anmeldenummer: PCT/EP2013/053081
(87) Internationale Veröffentlichungsnummer: WO 2013/120998

(56) Entgegenhaltungen:
- WO-A2-2010/109145
- DE-A1-102005 039 794
- DE-A1-102010 039 281
- GB-A- 2 143 589
- US-A- 4 498 524
- US-A1- 2005 133 202

## Beschreibung

Die Erfindung betrifft eine Abgaswärmenutzungsvorrichtung gemäß dem Oberbegriff des Anspruchs 1.

Dampferzeuger können bspw. bei einem Rankine-Kreisprozess bzw. bei einem Clausius-Rankine-Kreisprozess zur Verwendung kommen, um das Arbeitsmedium des jeweiligen Kreisprozesses verdampfen zu können. Ein derartiger Dampferzeuger kann dabei grundsätzlich mit einem Wärmetauscher ausgestattet sein bzw. nach Art eines Wärmetauschers aufgebaut sein.

Eine Abwärmenutzungsvorrichtung, die auf Basis eines Rankine-Kreisprozesses bzw. eines Clausius-Rankine-Kreisprozesses arbeitet, umfasst üblicherweise einen Abwärmenutzungskreis, in dem ein geeignetes Arbeitsmedium zirkuliert. Im Abwärmenutzungskreis sind in der Strömungsrichtung des Arbeitsmediums hintereinander üblicherweise ein Dampferzeuger zum Verdampfen des Arbeitsmediums, eine Expansionsmaschine zum Entspannen des Arbeitsmediums, ein Kondensator zum Kondensieren des Arbeitsmediums sowie eine Fördereinrichtung zum Antreiben des Arbeitsmediums im Abwärmenutzungskreis angeordnet. Mithilfe einer derartigen Abwärmenutzungsvorrichtung kann bspw. bei einer Brennkraftmaschine auftretende Abwärme genutzt werden, um den energetischen Wirkungsgrad der Brennkraftmaschine zu verbessern. Bspw. kann mithilfe der Expansionsmaschine mechanische Arbeit erzeugt werden, die zur Unterstützung der Brennkraftmaschine herangezogen werden kann. Ebenso ist es möglich, mithilfe der Expansionsmaschine in Verbindung mit einem Generator Strom zu erzeugen, der, insbesondere in Verbindung mit einem geeigneten Energiespeicher, zur Versorgung elektrischer Komponenten der Brennkraftmaschine oder eines mit der Brennkraftmaschine ausgestatteten Fahrzeugs genutzt werden kann. Eine Abwärmenutzungseinrichtung der vorbeschriebenen Art unter Einschluss eines Abgas-Bypasses um den Dampferzeuger zeigt das Dokument WO 2010/109145 A2, welches den nächstliegenden Stand der Technik gegenüber der vorliegenden Erfindung darstellt.

Damit eine derartige Abwärmenutzungsvorrichtung einen besonders hohen energetischen Wirkungsgrad besitzt, ist die Wärmeübertragung zwischen einem Heizfluid, dessen Wärme als Abwärme ausgenutzt werden soll, und dem Arbeitsmedium des Abwärmenutzungskreises von hoher Bedeutung.

Aus der DE 10 2005 039 794 A1 ist eine Wärmetauscher-Einrichtung für eine Abgasanlage einer Brennkraftmaschine in einem Kraftfahrzeug bekannt, wobei dieser Abgas-Wärmetauscher einen Wärmetauscher-Kanal aufweist, in dem ein Wärmetauscher angeordnet ist. Die Wärmetauscher-Einrichtung weist ferner einen Bypass-Kanal zur Umgehung des Wärmetauscher-Kanals auf. Zur Reduzierung von Herstellungskosten der Wärmetauscher-Einrichtung sind die beiden Kanäle derart angeordnet, dass der eine Kanal den anderen Kanal umhüllt. Bei der bekannten Wärmetauscher-Einrichtung ist der Wärmetauscher in einen Kühlkreis der Brennkraftmaschine fluidisch eingebunden, so dass beispielsweise bei einem Kaltstart der Brennkraftmaschine über das Abgas die Brennkraftmaschine rasch aufgeheizt werden kann. Ebenso steht im Abgas genügend Wärme zur Verfügung, um über den Kühlkreis der Brennkraftmaschine in üblicher Weise einen Fahrgastraum eines mit der Brennkraftmaschine ausgestatteten Kraftfahrzeugs zu beheizen.

Es ist eine Aufgabe der vorliegenden Erfindung, eine verbesserte Ausführungsform für einen Dampferzeuger bzw. für eine Abwärmenutzungsvorrichtung bereitzustellen.

Diese Aufgabe wird gelöst durch die Gegenstände der unabhängigen Ansprüche. Bevorzugte Ausführungsformen sind Gegenstand der abhängigen Ansprüche.

Der erfindungsgemäße Dampferzeuger ist mit einem Wärmetauscher-Kanal, in welchem ein Wärmetauscher angeordnet ist, und mit einem Bypass-Kanal zur Umgehung des Wärmetauscher-Kanals ausgebildet, wobei der Wärmetauscher-Kanal den Bypass-Kanal umhüllt. Der Dampferzeuger ist dabei so konfiguriert, dass das zu verdampfende Arbeitsmedium durch den Wärmetauscher geführt werden kann, während ein Heizfluid, das die zum Verdampfen des Arbeitsmediums benötigte Wärme zuführt, durch den Wärmetauscher-Kanal geführt werden kann, so dass es den darin angeordneten Wärmetauscher beaufschlagt bzw. umströmt. Von besonderer Bedeutung ist dabei, dass der Bypass-Kanal zentral angeordnet ist, so dass er mit geringem Durchströmungswiderstand durchströmbar ist. Auf diese Weise kann beispielsweise die Gefahr einer Überhitzung des Wärmetauschers für den Fall reduziert werden, dass nur vergleichsweise wenig Wärme zum Verdampfen des Arbeitsmediums benötigt wird.

Gemäß einer vorteilhaften Ausführungsform kann der Wärmetauscher wendelartig um den Bypass-Kanal angeordnet sein. Auf diese Weise ergibt sich zum einen eine besonders kompakte Bauweise für den erfindungsgemäßen Dampferzeuger, zum anderen lässt sich der erfindungsgemäße Dampferzeuger auf relativ einfache Art und Weise technisch realisieren, was sich günstig auf die Herstellungskosten des Dampferzeugers auswirkt.

Zur Ausbildung des Dampferzeugers in einer besonders kompakten Bauweise kann der Dampferzeuger ein im Wesentlichen rohrförmiges Gehäuse umfassen, in welchem der im Wesentlichen rohrförmig ausgebildete Bypass-Kanal angeordnet ist, so dass der Wärmetauscher-Kanal durch einen zwischen dem Bypass-Kanal und dem Gehäuse angeordneten ringförmigen Zwischenraum gebildet ist. Der Wärmetauscher ist dann in diesem Ringraum angeordnet.

In einer besonders einfach herzustellenden und damit kostengünstigen Ausführungsform kann daran gedacht sein, dass der Wärmetauscher als Rohrwendel ausgebildet ist, welche sich wendelartig entlang einer Außenumfangsfläche des Bypass-Kanals erstreckt. Insbesondere kann die Rohrwendel dabei derart ausgebildet sein, dass sie mit geringem Aufwand aus dem Dampferzeuger entfernt und wieder eingebaut werden kann. Auf diese Weise ist eine besonders wartungsfreundliche Realisierung des erfindungsgemäßen Dampferzeugers möglich. In einer weiterbildenden Ausführungsform liegt der Wärmetauscher unbefestigt an der Außenumfangsfläche des Bypass-Kanals an und ist nur in Endbereichen an dem Bypass-Kanal befestigt. Auf diese Weise werden durch Temperaturänderungen, insbesondere durch Temperaturunterschiede zwischen dem Wärmetauscher und dem Bypass-Kanal, hervorgerufene mechanische Spannungen aufgrund einer thermisch bedingten Ausdehnung oder Kontraktion des Bypass-Kanals bzw. des Wärmetauschers vermieden oder zumindest reduziert.

Um sicherzustellen, dass eine thermisch bedingte Ausdehnung des Wärmetauschers in Richtung des Gehäuses nicht zu unerwünschten mechanischen Spannungen beim Kontakt des Wärmetauschers mit dem Gehäuse führen kann, kann in einer weiterbildenden Ausführungsform der Wärmetauscher wenigstens zwischen seinen Endbereichen beabstandet zu dem Gehäuse angeordnet sein. Auch können die einzelnen Wendeln oder Windungen innerhalb der Rohrwendel so ausgelegt sein, dass sich benachbarte Wendeln zumindest im kalten Zustand axial nicht berühren. Erfindungsgemäß ist zwischen dem Wärmetauscher-Kanal und dem Bypass-Kanal eine thermische Isolationsschicht, insbesondere aus Metallschaum, angeordnet. Auf diese Weise wird die thermische Isolierung zwischen dem Wärmetauscher-Kanal und dem Bypass-Kanal deutlich verbessert.

Zur Verbesserung der thermischen Wechselwirkung zwischen einem durch den Wärmetauscher-Kanal fließenden Heizfluid, insbesondere Abgas, und einem durch den Wärmetauscher fließenden Arbeitsmedium, kann in einer besonders bevorzugten Ausführungsform an einer Außenumfangsfläche der Rohrwendel eine Mehrzahl von scheibenartigen Rippen ausgebildet sein, wobei jede Rippe jeweils in radialer Richtung von der Außenumfangsfläche der Rohrwendel abstehen kann. Ebenso ist eine wendelartig umlaufende Rippenanordnung denkbar.

Vorzugsweise kann der Dampferzeuger einen Einlassbereich und einen Auslassbereich aufweisen, in welchen vorzugsweise jeweils eine Perforation ausgebildet ist. Diese kann insbesondere in dem im Wesentlichen rohrförmig ausgebildeten Bypass-Kanal angeordnet sein, aber alternativ auch in Form eines separaten Rohrstücks realisiert sein. Auf diese Weise kann sichergestellt werden, dass ein in den Abgaswärmetauscher eintretendes Abgas wahlweise sowohl dem Wärmetauscher-Kanal als auch dem Bypass-Kanal zugeführt bzw. sowohl aus dem Wärmetauscher-Kanal als auch aus dem Bypass-Kanal abgeführt werden kann. Der Einlassbereich und der Auslassbereich können somit die Funktion einer Fluidweiche für das in die Wärmetauscher-Einrichtung eintretende bzw. aus dieser austretende Abgas erfüllen.

Besonders vorteilhaft ist eine Ausführungsform, bei welcher der Bypass-Kanal axial fluchtend zu einem gemeinsamen Einlass und/oder zu einem gemeinsamen Auslass des Dampferzeugers angeordnet ist, so dass das Heizfluid quasi umlenkungsfrei, insbesondere geradlinig, durch den Dampferzeuger hindurchströmen kann, wenn es dem Bypass-Kanal folgt, wodurch für diesen Fall ein extrem niedriger Durchströmungswiderstand realisierbar ist. Vorzugsweise besitzt der Bypass-Kanal im Wesentlichen den gleichen durchströmbaren Querschnitt wie besagter Einlass und/oder besagter Auslass.

Vorzugsweise weist der Bypass-Kanal ein Steuerglied zum Öffnen und Sperren des Bypass-Kanals auf. Auf diese Weise kann ein in den Dampferzeuger eintretendes Heizfluid wahlweise durch den Bypass-Kanal oder durch den Wärmetauscher-Kanal geführt werden. Bei geöffnetem Steuerglied folgt das Heizfluid, vorzugsweise Abgas der Brennkraftmaschine, dem Bypass-Kanal, da dieser keinen Wärmetauscher enthält und somit einen deutlich geringeren Durchströmungswiderstand besitzt als der Wärmetauscher-Kanal.

In einer besonders bevorzugten Ausführungsform kann das Steuerglied als drehbare Bypass-Klappe, insbesondere Schmetterlingsklappe, ausgebildet sein, welche zwischen einer geöffneten Position, in welcher der Bypass-Kanal geöffnet ist, und einer gesperrten Position, in welcher der Bypass-Kanal gesperrt ist, drehbar ist. Dies ermöglicht ein einfaches Sperren bzw. Öffnen des Bypass-Kanals.

In einer weiterbildenden Ausführungsform kann das Steuerglied eine in Bezug auf die geöffnete bzw. gesperrte Position eine oder mehrere beliebige Zwischenposition einnehmen, in welcher der Bypass-Kanal nur teilweise, insbesondere mit einem bestimmten Öffnungsgrad, geöffnet ist.

Für die Ermöglichung einer besonders einfachen technischen Realisierung des Steuerglieds kann dieses in dem Einlassbereich oder in dem Auslassbereich des Bypass-Kanals angeordnet sein.

Die vorliegende Erfindung betrifft in einer Weiterbildung ferner ein Dampferzeuger-System zur Verwendung in einem Kraftfahrzeug, umfassend einen ersten und einen zweiten Dampferzeuger, jeweils der vorstehend beschriebenen Art, welche nebeneinander und im Wesentlichen parallel zueinander angeordnet sind. Das Dampferzeuger-System umfasst ferner ein, vorzugsweise als Y-Rohr ausgebildetes, einlassseitiges Kopplungselement mit einem Abgaseingang und einer ersten Kopplungsöffnung, welche mit einer Einlassöffnung des ersten Dampferzeugers in Fluidverbindung steht sowie mit einer zweiten Kopplungsöffnung, welche mit einer Einlassöffnung des zweiten Dampferzeugers in Fluidverbindung steht, auf.

Das Dampferzeuger-System umfasst ferner ein, vorzugsweise als Y-Rohr ausgebildetes, auslassseitiges Kopplungselement mit einem Abgasausgang und einer ersten Kopplungsöffnung, welche mit der Auslassöffnung des ersten Dampferzeugers in Fluidverbindung steht, sowie mit einer zweiten Kopplungsöffnung, welche mit der Auslassöffnung des zweiten Dampferzeugers in Fluidverbindung steht. Mittels eines derartigen Dampferzeuger-Systems ist eine besonders effektiv arbeitende und gleichzeitig kompakte Dampferzeuger-Einrichtung realisiert, welcher sich zudem besonders gut in den in einem Unterboden eines Kraftfahrzeugs zu Verfügung stehenden Bauraum integrieren lässt.

In einer technisch besonders einfach realisierbaren Ausführungsform weist das Dampferzeuger-System einen gemeinsamen Zulaufanschluss und einen gemeinsamen Rücklaufanschluss auf, welche jeweils mit den Endbereichen des Wärmetauschers des ersten und des zweiten Dampferzeugers in Fluidverbindung stehen.

In einer besonders bevorzugten Ausführungsform weist das Dampferzeuger-System eine Antriebseinheit auf zum gemeinsamen Antrieb der beiden Steuerglieder des ersten und des zweiten Dampferzeugers. Ein solches Dampferzeuger-System lässt sich technisch besonders einfach und damit auch besonders kostengünstig herstellen.

Eine erfindungsgemäße Abwärmenutzungsvorrichtung, insbesondere für eine Brennkraftmaschine, vorzugsweise in einem Kraftfahrzeug, umfasst, neben allen weiteren Merkmalen des unabhängigen Anspruchs 1, unter Anderem einen Abwärmenutzungskreis, in dem ein Arbeitsmedium zirkuliert, einen im Abwärmenutzungskreis angeordneten Dampferzeuger der vorstehend beschriebenen Art bzw. ein Dampferzeuger-System der vorstehend beschriebenen Art zum Verdampfen des Arbeitsmediums, eine im Abwärmenutzungskreis stromab des Dampferzeugers bzw. stromab des Dampferzeuger-Systems angeordnete Expansionsmaschine zum Entspannen des Arbeitsmediums, einen im Abwärmenutzungskreis stromab der Expansionsmaschine angeordneten Kondensator zum Kondensieren des Arbeitsmediums und eine im Abwärmenutzungskreis stromab des Kondensators angeordnete Fördereinrichtung zum Antreiben des Arbeitsmediums im Kreis. Ferner ist dabei der Wärmetauscher des Dampferzeugers bzw. sind die Wärmetauscher des Dampferzeuger-Systems jeweils in den Abwärmenutzungskreis fluidisch eingebunden, während im Betrieb der Abwärmenutzungsvorrichtung der Wärmetauscher-Kanal des Dampferzeugers bzw. die Wärmetauscher-Kanäle des Dampferzeuger-Systems jeweils vom Abgas der Brennkraftmaschine durchströmt ist bzw. sind. Hierdurch ergibt sich eine besonders kompakt bauende wärmeübertragende Kopplung zwischen der Brennkraftmaschine und der Abwärmenutzungsvorrichtung, die sich außerdem durch einen hohen energetischen Wirkungsgrad auszeichnet.

Die vorliegende Erfindung betrifft somit auch einen Dampferzeuger bzw. ein Dampferzeuger-System, der bzw. das sich durch eine Verwendung in einer Abwärmenutzungsvorrichtung bzw. in einem Rankine-Kreis auszeichnet.

Eine erfindungsgemäße Brennkraftmaschine, insbesondere in einem Kraftfahrzeug, umfasst nun eine Abgasanlage, die wenigstens einen Abgasstrang zum Abführen von Abgas der Brennkraftmaschine aufweist, und eine Abwärmenutzungsvorrichtung der vorstehend beschriebenen Art, wobei der Wärmetauscher-Kanal des Dampferzeugers bzw. die Wärmetauscher-Kanäle des Dampferzeuger-Systems jeweils in den Abgasstrang der Brennkraftmaschine fluidisch eingebunden ist bzw. sind. Diese Maßnahmen führen ebenfalls zu einem kompakten Aufbau und einem hohen Wirkungsgrad, was die Integration in eine mobile Anwendung, vorzugsweise in ein Fahrzeug begünstigt. Dementsprechend betrifft die vorliegende Erfindung auch ein Kraftfahrzeug, das eine Brennkraftmaschine der vorbeschriebenen Art zum Antreiben des Fahrzeugs aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen, wie er durch den unabhängigen Anspruch 1 definiert ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen jeweils schematisch
- Fig. 1: eine stark vereinfachte, schaltplanartige Prinzipdarstellung einer Brennkraftmaschine mit einer Abwärmenutzungsvorrichtung,
- Fig. 2: ein Ausführungsbeispiel eines Dampferzeugers in einem Längsschnitt,
- Fig. 3: ein Ausführungsbeispiel eines Dampferzeuger-Systems in einer iso-metrischen Ansicht,
- Fig. 4: das Ausführungsbeispiel des Dampferzeuger-Systems gemäß der Figur 3 mit einem Einlass- und einem Auslass-Kopplungselement in einer isometrischen Ansicht.
Die Erfindung ist durch die Gesamtheit der Merkmale des unabhängigen Anspruchs 1 definiert.

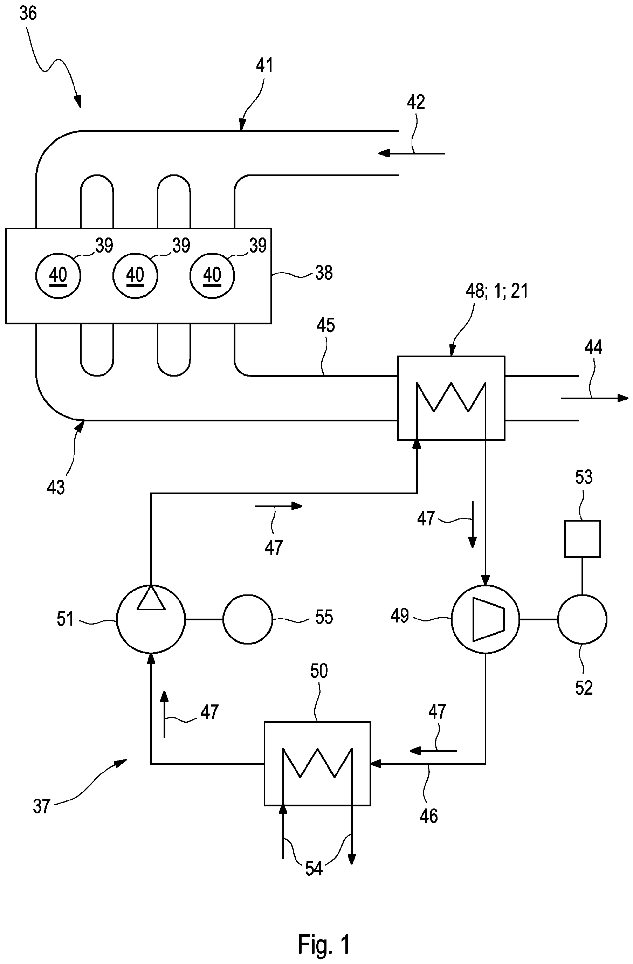

Entsprechend Fig. 1 kann eine Brennkraftmaschine 36 eines im Übrigen nicht dargestellten Kraftfahrzeugs mit einer Abwärmenutzungsvorrichtung 37 ausgestattet sein. Die Brennkraftmaschine 36 besitzt einen Motorblock 38, der hier rein exemplarisch mit drei Zylindern 39 dargestellt ist, deren Brennräume 40 mithilfe einer Frischluftanlage 41 mit Frischluft 42 versorgt werden. Eine Abgasanlage 43 sorgt für einen Abtransport von Abgas 44 der Brennkraftmaschine 36, das im Betrieb der Brennkraftmaschine 36 in den Brennräumen 40 entsteht. Die Abgasanlage 43 umfasst hierzu wenigstens einen Abgasstrang 45. Das darin abgeführte Abgas 44 enthält Wärme, die mithilfe der Abwärmenutzungsvorrichtung 37 genutzt werden soll. Die Abwärmenutzungsvorrichtung 37 umfasst einen Abwärmenutzungskreis 46, in dem ein Arbeitsmedium 47 zirkuliert. Die Abwärmenutzungsvorrichtung 37 arbeitet bevorzugt nach dem Prinzip eines Rankine-Kreisprozesses bzw. nach dem Prinzip eines Clausius-Rankine-Kreisprozesses. Dementsprechend umfasst die Abwärmenutzungsvorrichtung 37 einen im Abwärmenutzungskreis 46 angeordneten Verdampfer 48 zum Verdampfen des Arbeitsmediums 47. Ferner sind im Abwärmenutzungskreis 46 in der Strömungsrichtung des Arbeitsmediums 47 auf den Verdampfer 48 folgend eine Expansionsmaschine 49 zum Entspannen des Arbeitsmediums 47, ein Kondensator 50 zum Kondensieren des Arbeitsmediums 47 und eine Fördereinrichtung 51 zum Antreiben des Arbeitsmediums 47 im Abwärmenutzungskreis 46 angeordnet. Die Expansionsmaschine 49 treibt im Beispiel der Fig. 1 einen Generator 52 an, um so elektrische Energie zu erzeugen. Diese kann bspw. in einem Speicher 53 gespeichert werden, der bspw. als Batterie konzipiert ist. Der Kondensator 50 kann bspw. an einen Kühlkreis 54 angeschlossen sein, bei dem es sich bevorzugt um den Kühlkreis der Brennkraftmaschine 36 handeln kann. Die Fördereinrichtung 51 ist bspw. eine volumetrische Pumpe und kann mithilfe eines Antriebsmotors 55 angetrieben sein.

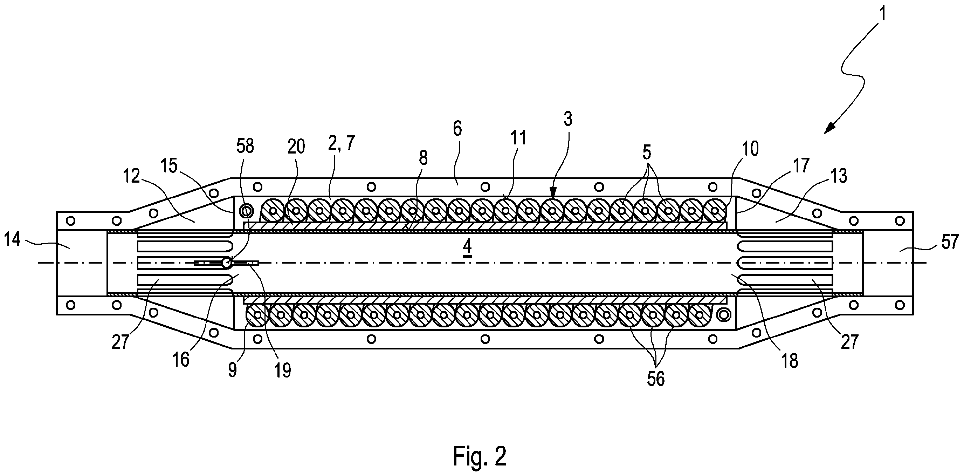

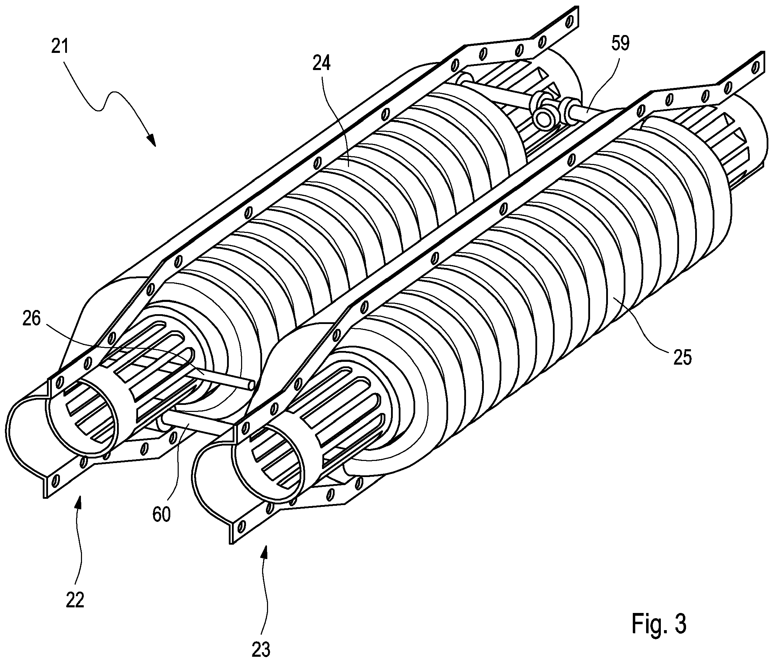

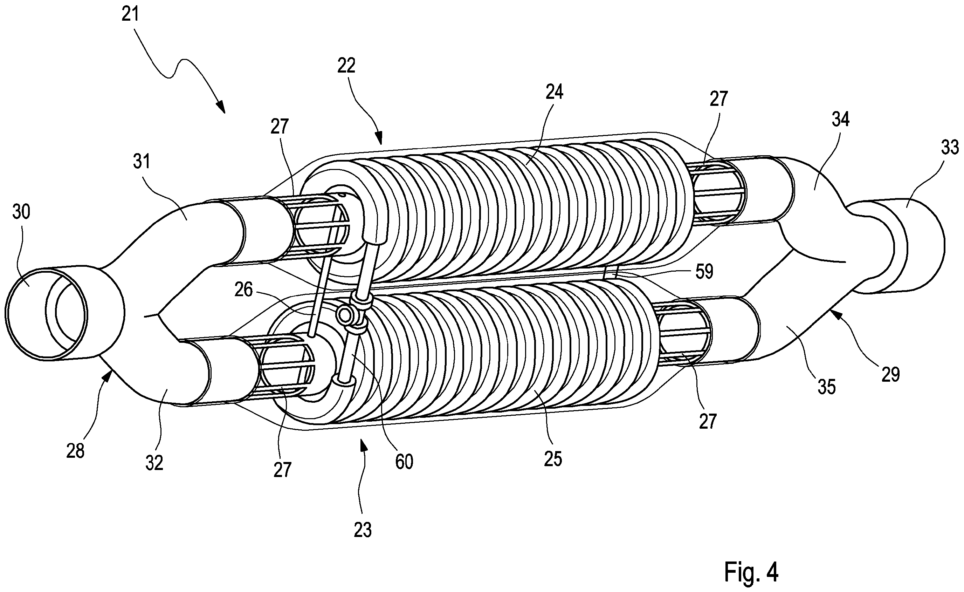

Der Verdampfer 48 ermöglicht die wärmeübertragende Kopplung zwischen der Abgasanlage 43 und dem Abwärmenutzungskreis 46. Hierzu ist der Verdampfer 48 einerseits in den Abgasstrang 45 und andererseits in den Abwärmenutzungskreis 46 eingebunden. Der Verdampfer 48 ist bei der hier vorgestellten Brennkraftmaschine 36 bzw. bei der hier vorgestellten Abwärmenutzungsvorrichtung 37 zweckmäßig als Dampferzeuger 1 oder als Dampferzeuger-System 21 konzipiert. Besagter Dampferzeuger 1 wird nachfolgend mit Bezug auf Fig. 2 näher erläutert. Besagtes Dampferzeuger-System 21 wird nachfolgend anhand der Figuren 3 und 4 näher erläutert, wobei das Dampferzeugersystem 21 zumindest zwei Dampferzeuger 1 umfasst.

In der Darstellung der Fig. 2 ist ein solcher Dampferzeuger in einer Längsschnittansicht gezeigt und mit 1 bezeichnet. Der Dampferzeuger 1 umfasst einen Wärmetauscher-Kanal 2, in welchem ein Wärmetauscher 3 angeordnet ist. Ferner umfasst der Dampferzeuger 1 einen im Wesentlichen rohrförmig ausgebildeten Bypass-Kanal 4 zur Umgehung des Wärmetauscher-Kanals 2. Der Wärmetauscher-Kanal 2 umhüllt den Bypass-Kanal 4, wobei der Wärmetauscher 3 wendelartig um den Bypass-Kanal 4 angeordnet ist. Der wendelartige Wärmetauscher 3 weist dabei eine Vielzahl von Wendeln oder Windungen 5 auf, die den Bypass-Kanal 4 umschlingend im Wärmetauscher-Kanal 2 angeordnet sind.

In dem Ausführungsbeispiel gemäß der Fig. 2 ist der Dampferzeuger 1 mit einem Gehäuse 6 ausgebildet, in welchem der im Wesentlichen rohrförmig ausgebildete Bypass-Kanal 4 angeordnet ist. Zwischen dem Gehäuse 6 und einer Außenumfangsfläche 8 des Bypass-Kanals 4 ist ein ringförmiger Zwischenraum 7 ausgebildet, welcher wiederum den Wärmetauscher-Kanal 2 ausbildet.

In dem Ausführungsbeispiel ist der Wärmetauscher 3 als Rohrwendel ausgebildet, welche sich wendelartig entlang der Außenumfangsfläche 8 des Bypass-Kanals 4 erstreckt. In dem Ausführungsbeispiel ist eine konzentrische Anordnung des Bypass-Kanals 4 im Inneren des Gehäuses 6 dargestellt, grundsätzlich ist jedoch auch eine außermittige Anordnung für den Bypass-Kanal 4 denkbar. Auch ist in dem Ausführungsbeispiel ein durchströmbarer Querschnitt des Bypass-Kanals 4 kreisförmig ausgebildet, wohingegen der Wärmetauscher-Kanal 2 einen durchströmbaren Querschnitt aufweist, welcher ringförmig ausgebildet ist. Grundsätzlich sind die Geometrien der Querschnitte jedoch frei wählbar, so dass die durch das Gehäuse 6 definierte Außenkontur des Dampferzeugers 1 insbesondere an jeweilige Einbaubedingungen, beispielsweise beim Einbau in ein Kraftfahrzeug, anpassbar ist.

Der Wärmetauscher 3 kann nur in Endbereichen 9, 10 an dem Gehäuse 6 bzw. dem Bypass-Kanal 4 befestigt sein, wohingegen er zwischen den Endbereichen 9, 10 nur an der Außenumfangsfläche 8 des Bypass-Kanals 4 anliegen kann. In einer erfindungsgemäßen Ausführung, die in der Darstellung der Fig. 2 gezeigt ist, ist zwischen dem Wärmetauscher 3, welcher als Rohrwendel ausgebildet ist, und der Außenumfangsfläche 8 des Bypass-Kanals 4 eine thermische Isolationsschicht 20 zur verbesserten thermischen Isolation des Wärmetauscher-Kanals 2 gegenüber dem Bypass-Kanal 4 angeordnet. Diese kann insbesondere aus Metallschaum ausgebildet sein.

In einer Variante des Ausführungsbeispiels können an einer Außenumfangsfläche 11 des als Rohrwendel ausgebildeten Wärmetauschers 3 scheibenartige Rippen 56 ausgebildet sein, wobei jede Rippe 56 jeweils in radialer Richtung von der Außenumfangsfläche 11 der Rohrwendel absteht. Mittels derartiger Rippen 56 kann die effektiv zur Verfügung stehende Wechselwirkungsfläche für den Wärmeaustausch des den Wärmetauscher-Kanal 2 durchströmenden Abgases 44 mit dem den Wärmetauscher 3 durchströmenden Arbeitsmedium 47 erhöht und somit die Effizienz des Dampferzeugers 1 verbessert werden.

Der Dampferzeuger 1 weist ferner einen Einlassbereich 12 und einen Auslassbereich 13 auf, mittels derer der Dampferzeuger 1 auf einfache Weise in die Abgasanlage 43, insbesondere für ein Kraftfahrzeug, eingebunden werden kann. Der Einlassbereich 12 oder/und der Auslassbereich 13 können dabei insbesondere trichterförmig ausgebildet sein. Der Einlassbereich 12 verbindet innerhalb des Dampferzeugers 1 einen Abgas-Einlass 14 des Dampferzeugers 1 mit einem Wärmetauscher-Einlass 15 und mit einem Bypass-Einlass 16. Entsprechend verbindet der Auslassbereich 13 im Inneren des Dampferzeugers 1 einen Abgas-Auslass 57 mit einem Wärmetauscher-Auslass 17 und mit einem Bypass-Auslass 18.

In einer Variante kann der Einlassbereich 12 oder/und der Auslassbereich 13 jeweils eine Perforation 27 aufweisen, mittels welcher eine Verteilung des über den Abgas-Einlass 14 in den Dampferzeuger 1 eintretenden Abgases 44 in den Wärmetauscher-Kanal 2 oder in den Bypass-Kanal 4 erfolgen kann. Die Perforation 27 kann in einer Variante direkt in einem axialen Endabschnitt des rohrförmigen Bypass-Kanals 4 ausgebildet sein, oder, alternativ, in Form eines separaten Rohrstücks realisiert sein, das stromauf bzw. stromab des Bypass-Kanals 4 im Gehäuse 6 angeordnet ist. Entsprechendes gilt mutatis mutandis ausgangsseitig für eine Abführung des Abgases 44 aus dem Dampferzeuger 1 stromauf des Abgas-Auslasses 57.

Des Weiteren kann der Dampferzeuger 1 des Ausführungsbeispiels ein Steuerglied 19 umfassen zum wahlweisen Öffnen oder Sperren des Bypass-Kanals 4. In dem Ausführungsbeispiel ist das Steuerglied 19 als drehbare Bypass-Klappe, insbesondere als zentral gelagerte Schmetterlingsklappe, ausgebildet, welche zwischen einer geöffneten Position, in welcher der Bypass-Kanal 4 geöffnet ist, und einer gesperrten Position, in welcher der Bypass-Kanal 4 gesperrt ist, drehbar ist. In der Darstellung der Figur 2 befindet sich die Bypass-Klappe 19 in der geöffneten Position.

Insbesondere kann die Bypass-Klappe 19 auch bezüglich der geöffneten bzw. gesperrten Position beliebige Zwischenpositionen einnehmen, so dass der Bypass-Kanal 4 nur teilweise geöffnet ist. Dabei wird durch eine derartige Zwischenposition der Bypass-Klappe 19 ein beliebiger effektiver Öffnungsquerschnitt für den Bypass-Kanal 4 realisiert. Zum Antreiben der Bypass-Klappe 19 bzw. des Steuerglieds 19 kann diese/dieses drehfest mit einer Antriebswelle 58 verbunden sein. Eine solche Antriebswelle 58 kann dazu insbesondere quer zu einer Längsrichtung des Bypass-Kanals 4 durch den Wärmetauscher-Kanal 2 durchgeführt sein und außerhalb des Gehäuses 6 des Dampferzeugers 1 mit einem nicht gezeigten Stellantrieb drehfest verbunden sein. Mit Hilfe eines solchen Stellantriebs kann die Antriebswelle 58 und über diese das Steuerglied 19 drehend betätigt werden, um das Steuerglied 19 zwischen der geöffneten und der geschlossenen Position zu bewegen.

In dem Ausführungsbeispiel ist das Steuerglied 19 im Bereich des Bypass-Einlasses 16 angeordnet. Grundsätzlich kann das Steuerglied 19 jedoch an jeder beliebigen Stelle des Bypass-Kanals 4 angeordnet sein, insbesondere auch in einem Bereich des Bypass-Auslasses 18.

Für den Fall, dass der Dampferzeuger 1 in den Abwärmenutzungskreis 46 eingebunden ist, welcher einen Wärmebedarf aufweist, wird mit Hilfe des Steuerglieds 19 das in den Dampferzeuger 1 eintretendes Abgas 44 in den Wärmetauscher-Kanal 2 geführt. Hierzu wird das Steuerglied 19 in die gesperrte Position bewegt, so dass der Bypass-Kanal 4 für die Durchströmung mit Abgas 44 gesperrt ist. Auf diese Weise wird der Wärmetauscher 3 mit heißem Abgas 44 beaufschlagt, wodurch der gewünschte Wärmeeintrag in das Arbeitsmedium 47des Abwärmenutzungskreises 46 erzielt wird. Ein auf diese Weise abgekühltes Abgas 44 kann über den Auslassbereich 13 des Dampferzeugers 1 wieder aus diesem ausströmen.

Für den Fall, dass der Abwärmenutzungskreis 46 keinen Wärmebedarf aufweist, wird das Steuerglied 19 in die geöffnete Position bewegt, so dass der Bypass-Kanal 4 für die Durchströmung mit Abgas 44 geöffnet ist. Da der geöffnete Bypass-Kanal 4 typischerweise einen deutlich geringeren Durchströmungswiderstand als der Wärmetauscher-Kanal 2 aufweist, strömt das in den Dampferzeuger 1 eintretende Abgas 44 bevorzugt und überwiegend durch den Bypass-Kanal 4. In der Folge ist die Wärmeabgabe an dem Wärmetauscher 3 durch das durch den Wärmetauscher-Kanal 2 strömende Abgas 44 vernachlässigbar.

In der Darstellung der Fig. 3 ist nun ein Dampferzeuger-System 21 dargestellt, welches einen ersten und einen zweiten Dampferzeuger 1 der vorstehend beschriebenen Art umfasst, die im Folgenden mit 22 bzw. 23 bezeichnet werden. Mittels eines derartigen Dampferzeuger-Systems 21 kann in einer kompakten Bauweise eine besonders hohe Verdampfungsleistung erzielt werden. Um einen möglichst kompakten Aufbau des Dampferzeuger-Systems 21 sicherzustellen, sind der erste und zweite Dampferzeuger 22, 23 des Dampferzeuger-Systems 21 nebeneinander und im Wesentlichen parallel zueinander angeordnet. Ferner sind sie so in die Abgasanlage 43 eingebunden, dass sie vom Abgas 44 parallel durchströmt werden.

Die Zuführung bzw. Abführung von Abgas 44 in das Dampferzeuger-System 21 kann mittels eines vorzugsweise jeweils als Y-Rohr ausgebildeten Einlass- bzw. Auslass-Kopplungselements 28, 29 erfolgen, welche den ersten Dampferzeuger 22 mit dem zweiten Dampferzeuger 23 in deren jeweiligem Einlass- bzw. Auslassbereich 12, 13 in Fluidverbindung bringt. Ein derartiges Einlass- bzw. Auslass-Kopplungselement 28, 29 wird aus der Darstellung der Figur 4 ersichtlich, welche das Dampferzeuger-System 21 mit einem transparenten bzw. weggelassenem Gehäuse 6 zeigt. Das Einlass- bzw. Auslass-Kopplungselement 28, 29 kann dabei in der Art einer Fluidweiche wirken.

Das Einlass-Kopplungselement 28 weist einen Abgas-Eingang 30 mit einer ersten Kopplungsöffnung 31 auf, welche mit der Einlassöffnung des ersten Dampferzeugers 22 in Fluidverbindung steht, sowie eine zweite Kopplungsöffnung 32 auf, welche mit der Einlassöffnung des zweiten Dampferzeugers 23 in Fluidverbindung steht. Das Auslass-Kopplungselement 29 weist einen Abgas-Ausgang 33 mit einer ersten Kopplungsöffnung 34 auf, welche mit der Auslassöffnung des ersten Dampferzeugers 22 in Fluidverbindung steht, sowie eine zweiten Kopplungsöffnung 35 auf, welche mit der Auslassöffnung des zweiten Dampferzeugers 23 in Fluidverbindung steht.

Gemäß dem Ausführungsbeispiel der Fig. 3 und 4 sind die als Rohrwendel ausgebildeten Wärmetauscher 24, 25 des ersten bzw. zweiten Dampferzeugers 22, 23 in zueinander entgegengesetzter Umlaufrichtung wendelartig entlang einer Außenumfangsfläche der Bypass-Kanäle 4 des ersten bzw. zweiten Dampferzeugers 22, 23 angeordnet. In Varianten ist jedoch auch eine identische Umlaufrichtung der beiden Wärmetauscher 24, 25 möglich.

In dem Ausführungsbeispiel gemäß der Fig. 3 und 4 weist das Dampferzeuger-System 21 einen gemeinsamen Zulaufanschluss 59 und einen gemeinsamen Rücklaufanschluss 60 auf, welche jeweils mit beiden Endbereichen 9, 10 des Wärmetauschers 24, 25 des ersten bzw. des zweiten Dampferzeugers 22, 23 in Fluidverbindung stehen. Auf diese Weise kann das Arbeitsmedium auf technisch einfach zu realisierende Art und Weise dem ersten und zweiten Wärmetauscher 24, 25 des ersten bzw. des zweiten Dampferzeugers 22, 23 parallel zugeführt werden.

In der Darstellung der Fig. 3 und 4 ist ferner eine Antriebswelle 26 gezeigt, mittels welcher sowohl das Steuerglied 19 (in der Fig. 3 nicht gezeigt) des ersten Dampferzeugers 22 als auch des zweiten Dampferzeugers 23 simultan betätigt werden kann. Dazu kann die Antriebswelle 26 mit einer gemeinsamen Antriebseinheit (in der Fig. 3 ebenfalls nicht gezeigt) drehfest verbunden sein. Insbesondere kann die gemeinsame Antriebswelle 26 mit der jeweiligen Antriebswelle 58 des jeweiligen Stellglieds 19 drehfest verbunden sein oder die beiden einzelnen Antriebswellen 58 ersetzen.

Im Dampferzeuger 1 der Fig. 2 und im Dampferzeuger-System 21 sind die Pfade für das Abgas 44 und das Arbeitsmedium 46 zweckmäßig im Gegenstromprinzip geschaltet.

## Patentansprüche

1. Abwärmenutzungsvorrichtung, insbesondere für eine Brennkraftmaschine (36), vorzugsweise in einem Kraftfahrzeug,
- mit einem Abwärmenutzungskreis (46), in dem ein Arbeitsmedium (47) zirkuliert,
- mit wenigstens einem im Abwärmenutzungskreis (46) angeordneten Dampferzeuger (1) zum Verdampfen des Arbeitsmediums (47),
- mit einer im Abwärmenutzungskreis (46) stromab des Dampferzeugers (1) angeordneten Expansionsmaschine (49) zum Entspannen des Arbeitsmediums (47),
- mit einem im Abwärmenutzungskreis (46) stromab der Expansionsmaschine (49) angeordneten Kondensator (50) zum Kondensieren des Arbeitsmediums (47),
- mit einer im Abwärmenutzungskreis (46) stromab des Kondensators (50) angeordneten Fördereinrichtung (51) zum Antreiben des Arbeitsmediums (47) im Kreis (46),
- wobei der Dampferzeuger (1) einen Wärmetauscher-Kanal (2) aufweist, in dem ein Wärmetauscher (3) angeordnet ist,
- wobei der Dampferzeuger (1) einen Bypass-Kanal (4) zur Umgehung des Wärmetauscher-Kanals (2) aufweist,
- wobei der Wärmetauscher-Kanal (2) und der Bypass-Kanal (4) im Betrieb des Dampferzeugers (1) von einem Heizfluid durchströmbar sind,
- wobei der Wärmetauscher (3) im Betrieb des Dampferzeugers (1) von einem zu verdampfenden Medium durchströmbar ist,
- wobei der Wärmetauscher (3) des Dampferzeugers (1) in den Abwärmenutzungskreis (46) fluidisch eingebunden ist,
- wobei im Betrieb der Abwärmenutzungsvorrichtung (37) der Wärmetauscher-Kanal (2) des Dampferzeugers (1) vom Abgas (44) der Brennkraftmaschine (36) durchströmt ist,
**gekennzeichnet dadurch, dass**
der Wärmetauscher-Kanal (2) den Bypass-Kanal (4) umhüllt und dass zwischen dem Wärmetauscher-Kanal (3) und dem Bypass-Kanal (4) eine thermische Isolationsschicht (20) angeordnet ist.

2. Abwärmenutzungsvorrichtung nach Anspruch 1,
**dadurch gekennzeichnet,**
**dass** der Wärmetauscher (3) wendelartig um den Bypass-Kanal (4) angeordnet ist.

3. Abwärmenutzungsvorrichtung nach Anspruch 1 oder 2,
**dadurch gekennzeichnet,**
**dass** der Dampferzeuger (1) ein im Wesentlichen rohrförmiges Gehäuse (6) aufweist, das den Wärmetauscher-Kanal (2) umschließt und in dem der im Wesentlichen rohrförmig ausgebildete Bypass-Kanal (4) angeordnet ist, so dass der Wärmetauscher-Kanal (2) durch einen zwischen dem Bypass-Kanal (4) und dem Gehäuse (6) angeordneten ringförmigen Zwischenraum gebildet ist, in dem der Wärmetauscher (3) angeordnet ist.

4. Abwärmenutzungsvorrichtung nach einem der Ansprüche 1 bis 3,
**dadurch gekennzeichnet,**
**dass** der Wärmetauscher (3) als Rohrwendel ausgebildet ist, welche sich wendelartig entlang einer Außenumfangsfläche (8) des Bypass-Kanals (4) erstreckt.

5. Abwärmenutzungsvorrichtung nach einem der Ansprüche 1 bis 4,
**dadurch gekennzeichnet,**
**dass** der Wärmetauscher (3) nur in seinen Endbereichen (9, 10) an dem Bypass-Kanal (4) befestigt ist und im Übrigen zwischen seinen Endbereichen (9, 10) unbefestigt an der Außenumfangsfläche (8) des Bypass-Kanals (4) anliegt.

6. Abwärmenutzungsvorrichtung nach einem der Ansprüche 1 bis 5,
**dadurch gekennzeichnet,**
**dass** der Wärmetauscher (3) wenigstens zwischen seinen Endbereichen (9, 10) beabstandet zu einem den Wärmetauscher-Kanal (2) umschließenden Gehäuse (6) angeordnet ist.

7. Abwärmenutzungsvorrichtung nach einem der vorherigen Ansprüche, **dadurch gekennzeichnet,**
**dass** die thermische Isolationsschicht (20) aus Metallschaum gebildet ist.

8. Abwärmenutzungsvorrichtung zumindest nach Anspruch 4,
**dadurch gekennzeichnet,**
**dass** an einer Außenumfangsfläche (11) der Rohrwendel eine Mehrzahl von scheibenartigen, separaten Rippen ausgebildet ist, wobei jede Rippe jeweils in radialer Richtung von der Außenumfangsfläche (11) der Rohrwendel absteht.

9. Abwärmenutzungsvorrichtung nach einem der vorhergehenden Ansprüche, **dadurch gekennzeichnet,**
**dass** der Dampferzeuger (1) einen Einlassbereich (12) und einen Auslassbereich (13) aufweist, in welchen vorzugsweise jeweils eine Perforation (27) ausgebildet ist, durch die der Wärmetauscher-Kanal (2) fluidisch mit dem Bypass-Kanal (4) verbunden ist.

10. Abwärmenutzungsvorrichtung nach einem der vorhergehenden Ansprüche, **dadurch gekennzeichnet,**
**dass** der Bypass-Kanal (4) ein Steuerglied (19) zum Öffnen und Sperren des Bypass-Kanals (4) umfasst.

11. Abwärmenutzungsvorrichtung nach einem der vorhergehenden Ansprüche, **dadurch gekennzeichnet,**
- **dass** zwei Dampferzeuger (1) vorgesehen sind, nämlich ein erster Dampferzeuger (22) und ein zweiter Dampferzeuger (23), welche ein Dampferzeuger-System (21) bilden und welche nebeneinander und im Wesentlichen parallel zueinander angeordnet sind,
- **dass** ein, vorzugsweise als Y-Rohr ausgebildetes, einlassseitiges Kopplungselement (28) vorgesehen ist, das mit einem Abgas-Eingang (30) und einer ersten Kopplungsöffnung (31) ausgestattet ist, welche mit einer Einlassöffnung des ersten Dampferzeugers (22) in Fluidverbindung steht, sowie mit einer zweiten Kopplungsöffnung (32) ausgestattet ist, welche mit einer Einlassöffnung des zweiten Dampferzeugers (23) in Fluidverbindung steht,
- **dass** ein, vorzugsweise als Y-Rohr ausgebildetes, auslassseitiges Kopplungselement (29) vorgesehen ist, das mit einem Abgas-Ausgang (33) und einer ersten Kopplungsöffnung (34) ausgestattet ist, welche mit einer Auslassöffnung des ersten Dampferzeugers (22) in Fluidverbindung steht, sowie mit einer zweiten Kopplungsöffnung (35) ausgestattet ist, welche mit einer Auslassöffnung des zweiten Dampferzeugers (23) in Fluidverbindung steht.

12. Abwärmenutzungsvorrichtung nach Anspruch 11,
**dadurch gekennzeichnet,**
**dass** das Dampferzeuger-System (21) für die beiden Wärmetauscher (24, 25) der beiden Dampferzeuger (22, 23) einen gemeinsamen Zulaufanschluss (24) und einen gemeinsamen Rücklaufanschluss (25) aufweist, welche jeweils mit den Endbereichen des jeweiligen Wärmetauschers (24, 25) des ersten und des zweiten Dampferzeugers (22, 23) in Fluidverbindung stehen.

13. Abwärmenutzungsvorrichtung nach Anspruch 11 oder 12,
**dadurch gekennzeichnet,**
**dass** das Dampferzeuger-System (21) eine Antriebseinheit aufweist zum gemeinsamen Antrieb der beiden Steuerglieder (19) des ersten und des zweiten Dampferzeugers (22, 23).

14. Brennkraftmaschine, insbesondere in einem Kraftfahrzeug, mit einer Abgasanlage (43), die wenigstens einen Abgasstrang (45) zum Abführen von Abgas (44) der Brennkraftmaschine (36) aufweist, und mit einer Abwärmenutzungsvorrichtung (37) nach einem der vorhergehenden Ansprüche, wobei der Wärmetauscher-Kanal (2) des jeweiligen Dampferzeugers (1) in den Abgasstrang (45) fluidisch eingebunden ist.

## Claims

1. A waste heat recovery device, in particular for an internal combustion engine (36), preferentially in a motor vehicle,
- with a waste heat recovery circuit (46), in which a working medium (47) circulates,
- with at least one steam generator (1) which is arranged in a waste heat recovery circuit (46) for evaporating the working medium (47),
- with an expansion machine (49) which is arranged in the waste heat recovery circuit (46) downstream of the steam generator (1) for expanding the working medium (47),
- with a condenser (50) which is arranged in the waste heat recovery circuit (46) downstream of the expansion machine (49) for condensing the working medium (47),
- with a delivery device (51) which is arranged in the waste heat recovery circuit (46) downstream of the condenser (50) for driving the working medium (47) in the circuit (46),
- wherein the steam generator (1) comprises a heat exchanger channel (2), in which a heat exchanger (3) is arranged,
- wherein the steam generator (1) comprises a bypass channel (4) for bypassing the heat exchanger channel (2),
- wherein the heat exchanger channel (2) and the bypass channel (4) can be subjected to a through-flow of a heating fluid during the operation of the steam generator (1),
- wherein the heat exchanger (3) can be subjected to a through-flow of a medium to be evaporated during the operation of the steam generator (1),
- wherein the heat exchanger (3) of the steam generator (1) is fluidically incorporated in the waste heat recovery circuit (46),
- wherein during the operation of the waste heat recovery device (37) the heat exchanger channel (2) of the steam generator (1) is subjected to the through-flow of exhaust gas (44) of the internal combustion engine (36),
**characterized in that**
- the heat exchanger channel (2) envelopes the bypass channel (4), and
- a thermal insulating layer (20) is arranged between the heat exchanger channel (3) and the bypass channel (4).

2. The waste heat recovery device according to Claim 1,
**characterized in that** the heat exchanger (3) is helically arranged about the bypass channel (4).

3. The waste heat recovery device according to Claim 1 or 2,
**characterized in that**
the steam generator (1) comprises a substantially tubular housing (6), which surrounds the heat exchanger channel (2) and in which the substantially tubularly designed bypass channel (4) is arranged, so that the heat exchanger channel (2) is formed by an annular intermediate space which is arranged between the bypass channel (4) and the housing (6), in which the heat exchanger (3) is arranged.

4. The waste heat recovery device according to any one of the Claims 1 to 3,
**characterized in that**
the heat exchanger (3) is designed as a tube coil, which helically extends along an outer circumferential surface (8) of the bypass channel (4).

5. The waste heat recovery device according to any one of the Claims 1 to 4,
**characterized in that**
the heat exchanger (3) is fastened to the bypass channel (4) only in its end regions (9, 10) and otherwise contacts the outer circumferential surface (8) of the bypass channel (4) in the unfastened state between its end regions (9, 10).

6. The waste heat recovery device according to any one of the Claims 1 to 5,
**characterized in that**
the heat exchanger (3) is arranged spaced from a housing (6) encasing the heat exchanger channel (2) at least between its end regions (9, 10).

7. The waste heat recovery device according to any one of the preceding Claims,
**characterized in that**
the thermal insulating layer (20) is made of metal foam.

8. The waste heat recovery device at least according to Claim 4,
**characterized in that**
on an outer circumferential surface (11) of the tube coil a plurality of disc-like separate fins is formed, wherein each fin in each case projects from the outer circumferential surface (11) of the tube coil in radial direction.

9. The waste heat recovery device according to any one of the preceding Claims,
**characterized in that**
the steam generator (1) has an inlet region (12) and an outlet region (13), in each of which preferentially a perforation (27) is formed, through which the heat exchanger channel (2) is fluidically connected with the bypass channel (4).

10. The waste heat recovery device according to any one of the preceding Claims,
**characterized in that** the bypass channel (4) comprises a control element (19) for opening and closing the bypass channel (4).

11. The waste heat recovery device according to any one of the preceding Claims,
**characterized in that**
- two steam generators (1) are provided, namely a first steam generator (22) and a second steam generator (23) which are arranged next to one another and substantially parallel to one another,
- a coupling element (28) is provided on the inlet side, preferentially designed as a Y-tube, comprising an exhaust gas inlet (30) and a first coupling opening (31), which is fluidically connected with an inlet opening of the first steam generator (22), and comprising a second coupling opening (32), which is fluidically connected with an inlet opening of the second steam generator (23),
- a coupling element (29) is provided on the outlet side, preferentially designed as a Y-tube, comprising an exhaust gas outlet (33) and a first coupling opening (34), which is fluidically connected with an outlet opening of the first steam generator (22), and comprising a second coupling opening (35), which is fluidically connected with an outlet opening of the second steam generator (23).

12. The waste heat recovery device according to Claim 11,
**characterized in that** the steam generator system (21) for the two heat exchangers (24, 25) of the two steam generators (22, 23) has a common inflow connection (24) and a common return flow connection (25), which are each fluidically connected with the end regions of the respective heat exchanger (24, 25) of the first and of the second steam generator (22, 23).

13. The waste heat recovery device according to Claim 11 or 12,
**characterized in that** the steam generator system (21) comprises a drive unit for the joint driving of the two control elements (19) of the first and of the second steam generator (22, 23).

14. An internal combustion engine, in particular in a motor vehicle, with an exhaust system (43), comprising at least one exhaust gas system (45) for discharging exhaust gas (44) of the internal combustion engine (36), and with a waste heat recovery device (37) according to any one of the preceding Claims, wherein the heat exchanger channel (2) of the respective steam generator (1) is fluidically incorporated in the exhaust gas system (45).

## Revendications

1. Dispositif d'utilisation de chaleur résiduelle, en particulier pour un moteur à combustion interne (36), de préférence dans un véhicule automobile,
- avec un circuit d'utilisation de chaleur résiduelle (46) dans lequel circule un fluide de travail (47),
- avec au moins un générateur de vapeur (1) agencé dans le circuit d'utilisation de chaleur résiduelle (46) et destiné à l'évaporation du fluide de travail (47),
- avec une machine à expansion (49) agencée dans le circuit d'utilisation de chaleur résiduelle (46) en aval du générateur de vapeur (1) et destinée à la détente du fluide de travail (47),
- avec un condenseur (50) agencé dans le circuit d'utilisation de chaleur résiduelle (46) en aval de la machine à expansion (49) et destiné à la condensation du fluide de travail (47),
- avec un dispositif de transport (51) agencé dans le circuit d'utilisation de chaleur résiduelle (46) en aval du condensateur (50) et destiné à entraîner le fluide de travail (47) dans le circuit (46),
- dans lequel le générateur de vapeur (1) comporte un canal d'échangeur de chaleur (2) dans lequel est agencé un échangeur de chaleur (3),
- dans lequel le générateur de vapeur (1) comporte un canal de dérivation (4) destiné à contourner le canal d'échangeur de chaleur (2),
- dans lequel le canal d'échangeur de chaleur (2) et le canal de dérivation (4) peuvent être traversés par un fluide chauffant lors du fonctionnement du générateur de vapeur (1),
- dans lequel l'échangeur de chaleur (3) peut être traversé par un fluide à évaporer lors du fonctionnement du générateur de vapeur (1),
- dans lequel l'échangeur de chaleur (3) du générateur de vapeur (1) est intégré, au niveau du fluide, dans le circuit d'utilisation de chaleur résiduelle (46),
- dans lequel, lors du fonctionnement du dispositif d'utilisation de chaleur résiduelle (37), le canal d'échangeur de chaleur (2) du générateur de vapeur (1) est traversé par le gaz d'échappement (44) du moteur à combustion interne (36),
**caractérisé en ce que** le canal d'échangeur de chaleur (2) enveloppe le canal de dérivation (4) et **en ce qu'**une couche d'isolation thermique (20) est agencée entre le canal d'échangeur de chaleur (3) et le canal de dérivation (4).

2. Dispositif d'utilisation de chaleur résiduelle selon la revendication 1, **caractérisé en ce que** l'échangeur de chaleur (3) est agencé à la manière d'une hélice autour du canal de dérivation (4).

3. Dispositif d'utilisation de chaleur résiduelle selon la revendication 1 ou 2, **caractérisé en ce que** le générateur de vapeur (1) comporte une enveloppe (6) globalement tubulaire qui entoure le canal d'échangeur de chaleur (2) et dans laquelle le canal de dérivation (4) conçu globalement tubulaire est agencé de telle sorte que le canal d'échangeur de chaleur (2) est formé par un espace intermédiaire annulaire qui est agencé entre le canal de dérivation (4) et l'enveloppe (6) et dans lequel l'échangeur de chaleur (3) est agencé.

4. Dispositif d'utilisation de chaleur résiduelle selon l'une des revendications 1 à 3, **caractérisé en ce que** l'échangeur de chaleur (3) est conçu comme une hélice tubulaire qui s'étend en hélice le long d'une surface périphérique extérieure (8) du canal de dérivation (4).

5. Dispositif d'utilisation de chaleur résiduelle selon l'une des revendications 1 à 4, **caractérisé en ce que** l'échangeur de chaleur (3) est fixé seulement dans ses zones d'extrémité (9, 10) au canal de dérivation (4) et repose pour le reste, entre ses zones d'extrémité (9, 10), non fixé à la surface périphérique extérieure (8) du canal de dérivation (4).

6. Dispositif d'utilisation de chaleur résiduelle selon l'une des revendications 1 à 5, **caractérisé en ce que** l'échangeur de chaleur (3) est agencé au moins en ses zones d'extrémité (9, 10) à une certaine distance d'une enveloppe (6) entourant le canal d'échangeur de chaleur (2).

7. Dispositif d'utilisation de chaleur résiduelle selon l'une des revendications précédentes, **caractérisé en ce que** la couche d'isolation thermique (20) est formée d'une mousse métallique.

8. Dispositif d'utilisation de chaleur résiduelle au moins selon la revendication 4, **caractérisé en ce que** de multiples nervures séparées, à la manière de disques, sont conçues au niveau d'une surface périphérique extérieure (11) de l'hélice tubulaire, chaque nervure s'éloignant dans la direction radiale de la surface périphérique extérieure (11) de l'hélice tubulaire.

9. Dispositif d'utilisation de chaleur résiduelle selon l'une des revendications précédentes, **caractérisé en ce que** le générateur de vapeur (1) comporte une zone d'entrée (12) et une zone de sortie (13) dans lesquels est conçue à chaque fois de préférence une perforation (27) par laquelle le canal d'échangeur de chaleur (2) est relié, au niveau du fluide, au canal de dérivation (4).

10. Dispositif d'utilisation de chaleur résiduelle selon l'une des revendications précédentes, **caractérisé en ce que** le canal de dérivation (4) comprend un organe de commande (19) destiné à ouvrir et fermer le canal de dérivation (4).

11. Dispositif d'utilisation de chaleur résiduelle selon l'une des revendications précédentes, **caractérisé en ce que**
- il est prévu deux générateurs de vapeur (1), à savoir un premier générateur de vapeur (22) et un deuxième générateur de vapeur (23) qui forment un système générateur de vapeur (21) et qui sont agencés l'un à côté de l'autre et globalement parallèlement l'un à l'autre,
- il est prévu un élément de couplage (28) côté entrée, conçu de préférence comme un tuyau en Y, qui est équipé d'une entrée de gaz d'échappement (30) et d'une première ouverture de couplage (31) qui est en liaison au niveau du fluide avec une ouverture d'entrée du premier générateur de vapeur (22) ainsi que d'une deuxième ouverture de couplage (32) qui est en liaison au niveau du fluide avec une ouverture d'entrée du deuxième générateur de vapeur (23),
- il est prévu un élément de couplage (29) côté sortie, conçu de préférence comme un tuyau en Y, qui est équipé d'une sortie de gaz d'échappement (33) et d'une première ouverture de couplage (34) qui est en liaison au niveau du fluide avec une ouverture de sortie du premier générateur de vapeur (22) ainsi que d'une deuxième ouverture de couplage (35) qui est en liaison au niveau du fluide avec une ouverture de sortie du deuxième générateur de vapeur (23).

12. Dispositif d'utilisation de chaleur résiduelle selon la revendication 11, **caractérisé en ce que** le système générateur de vapeur (21) comporte pour les deux échangeurs de chaleur (24, 25) des deux générateurs de vapeur (22, 23) un raccord d'afflux commun (24) et un raccord de reflux commun (25) qui sont à chaque fois en liaison au niveau du fluide avec les zones d'extrémité de l'échangeur de chaleur (24, 25) respectif du premier et du deuxième générateur de vapeur (22, 23).

13. Dispositif d'utilisation de chaleur résiduelle selon la revendication 11 ou 12, **caractérisé en ce que** le système générateur de vapeur (21) comporte une unité d'entraînement destinée à entraîner de manière commune les deux organes de commande (19) du premier et du deuxième générateur de vapeur (22, 23).

14. Moteur à combustion interne, en particulier dans un véhicule automobile, avec une installation de gaz d'échappement (43), qui comporte au moins un système de gaz d'échappement (45) destiné à l'évacuation du gaz d'échappement (44) du moteur à combustion interne (36), et avec un dispositif d'utilisation de chaleur résiduelle (37) selon l'une des revendications précédentes, dans lequel le canal d'échangeur de chaleur (2) du générateur de vapeur (1) respectif est intégré au niveau du fluide dans le système de gaz d'échappement (45).
